# FASCICULE DE BREVET EUROPEEN

(11) **EP 2 872 847 B1**
(45) Date de publication et mention de la délivrance du brevet: **15.05.2019**
(21) Numéro de dépôt: 13730918.3
(22) Date de dépôt: 25.06.2013
(51) Int. Cl.: F28D 9/00, F28F 9/02, F02B 29/04, F28F 3/08, F28F 9/18, F28F 1/02, F28D 21/00

(54) **ECHANGEUR DE CHALEUR, NOTAMMENT REFROIDISSEUR D'AIR DE SURALIMENTATION DE MOTEUR DE VÉHICULE AUTOMOBILE**
WÄRMETAUSCHER, INSBESONDERE KRAFTFAHRZEUGMOTOR-LADELUFTKÜHLER
HEAT EXCHANGER, PARTICULARLY MOTOR VEHICLE ENGINE CHARGE AIR COOLER

(30) Priorité: 27.06.2012 FR 1256096
(43) Date de publication de la demande: 20.05.2015
(73) Titulaire: VALEO SYSTEMES THERMIQUES, 78321 Le Mesnil St Denis Cedex (FR)
(72) Inventeur: VALLEE, Nicolas, F-51110 Bazancourt (FR); NAUDIN, Yoann, F-08300 Saint Loup en Champagne (FR)
(74) Mandataire: Metz, Gaëlle
(86) Numéro de dépôt international: PCT/EP2013/063326
(87) Numéro de publication internationale: WO 2014/001366

(56) Documents cités:
- EP-A1- 2 014 892
- EP-A1- 2 085 730
- DE-A1- 10 016 113
- DE-A1- 10 103 584
- JP-A- 5 141 893
- US-A- 4 917 180

## Description

L'invention se rapporte aux échangeurs de chaleur, notamment refroidisseurs d'air de suralimentation de moteur de véhicule automobile. Un échangeur de chaleur selon le préambule de la revendication 1 est divulgué dans le document EP 2 014 892.

Dans ce domaine, il est connu des échangeurs, dits refroidisseurs d'air de suralimentation, permettant un échange de chaleur entre de l'air de suralimentation, destiné à alimenter le moteur du véhicule, et un liquide de refroidissement. Ils comprennent un faisceau d'échange de chaleur comportant un empilement de plaques déterminant entre elles des canaux de circulation alternés pour l'air de suralimentation et pour le liquide de refroidissement.

Chaque plaque guide le liquide de refroidissement dans un circuit comprenant plusieurs passes. Ces plaques ont la forme générale d'un rectangle allongé ayant deux grands cotés et deux petits cotés, chaque plaque comportant deux bossages, un premier des bossages présentant une entrée du circuit de circulation de liquide de refroidissement et l'autre des bossages présentant une sortie du circuit de circulation du liquide de refroidissement. Les bossages sont situés le long d'un même petit côté de la plaque. Ils sont destinés à venir en contact avec les bossages d'une plaque adjacente pour permettre au liquide de refroidissement de passer d'un canal de circulation à un autre. Ainsi, le fluide de refroidissement est réparti entre les plaques par les bossages d'entrée. Il s'écoule ensuite le long des passes des circuits de circulation du liquide de refroidissement jusqu'à sortir desdites plaques au niveau des bossages de sorties.

Chaque plaque comprend ainsi une zone d'échange de chaleur entre le liquide de refroidissement et l'air de suralimentation, située au niveau des passes, et une zone d'entrée/sortie permettant au liquide de refroidissement d'entrer et de sortir de chaque plaque.

Un inconvénient de cette configuration vient du fait que la zone dans laquelle se situent les bossages concentre des contraintes mécaniques pouvant engendrer une rupture des éléments brasés entre eux. Un autre inconvénient vient du fait que cette zone est très préjudiciable pour la performance thermique car l'air de suralimentation traversant cette zone, notamment entre les bossages et la première extrémité longitudinale de la plaque, ne passe pas par la zone d'échange entre les deux fluides et n'échange donc pas ou presque pas de chaleur avec le liquide refroidissement.

Il est connu pour contourner cette problématique de modifier les composants de l'échangeur ou d'ajouter une pièce supplémentaire faisant écran et permettant de limiter le passage du fluide à refroidir par cette zone. Mais cela complexifie les composants et/ou le processus de fabrication de l'échangeur, ce qui peut engendrer un surcoût et éventuellement une augmentation du poids de l'échangeur.

Pour pallier ces difficultés, il a déjà été envisagé par le déposant, dans une demande de brevet non publiée à la date de dépôt de la présente demande, des échangeurs de chaleur comprenant un collecteur de fluide de refroidissement, extérieur au boîtier. Le fluide de refroidissement alimente alors l'échangeur, depuis le collecteur, par une plaque collectrice du boîtier à travers laquelle des canaux de circulation du fluide de refroidissement du faisceau débouchent dans ledit collecteur.

La plaque collectrice comprend des collets entourant les canaux. Les collets qui participent au maintien mécanique des plaques du faisceau par rapport au boîtier nécessitent néanmoins de prévoir sur la plaque collectrice un espace supplémentaire pour définir un bord de liaison de la plaque collectrice aux parois du boîtier et au collecteur, et qui est non négligeable.

L'invention vise à remédier à cet inconvénient et propose à cet effet un échangeur de chaleur, notamment refroidisseur d'air de suralimentation de moteur de véhicule automobile, l'échangeur de chaleur comprenant un boîtier pourvu d'un faisceau d'échange de chaleur, un collecteur d'un fluide de refroidissement circulant dans ledit faisceau d'échange de chaleur et une plaque collectrice formant une paroi latérale du boîtier de l'échangeur de chaleur et du collecteur de fluide de refroidissement, ladite plaque collectrice étant pourvue d'orifices, communiquant avec des conduits de circulation du fluide de refroidissement du faisceau, et d'une partie de liaison plane, solidarisée audit collecteur de fluide de refroidissement, en vis-à-vis de bords, dits bords périphériques, desdits orifices, ladite partie de liaison plane étant contigüe d'au moins un desdits bords périphériques. Le collecteur présente un bord périphérique plan, disposé pour être solidarisé à ladite partie de liaison de la plaque collectrice. Le faisceau comprend des plaques présentant un bord plan d'extrémité venant, en plan, autour du bord desdits orifices de la plaque collectrice.

Autrement dit, les bords des orifices de la plaque collectrice se trouvant à proximité de ladite partie de liaison sont dépourvus de collets. Ainsi, le collecteur peut être solidarisé à la plaque collectrice au plus proche des orifices et il n'est pas nécessaire de devoir tenir compte de tels collets, comme dans les dispositifs d'échangeur de chaleur précités. Il est de la sorte possible de prévoir un collecteur de plus petite taille relativement à un collecteur d'un échangeur de chaleur comprenant une plaque collectrice à collets.

Ladite plaque collectrice pourra comporter une partie centrale munie desdits orifices, ladite partie centrale étant plane. Autrement dit, tous les orifices sont alors dépourvus de collets.

Ledit bord plan du collecteur pourra être issu d'une paroi du collecteur, ledit bord plan étant avantageusement plié vers l'extérieur de façon à permettre audit bord plan de s'appliquer en plan contre ladite partie de liaison de la plaque collectrice.

Ledit bord plan du collecteur et un desdits bords plans d'extrémité d'au moins une desdites plaques du faisceau pourront être disposés de part et d'autre de ladite partie de liaison. De préférence, ils sont opposés l'un à l'autre relativement à ladite partie de liaison.

La plaque collectrice pourra comprendre en outre, par exemple, une partie de bord plan, disposée adjacente à ladite partie de liaison et venant en contact avec une plaque formant paroi du boîtier. La partie de bord plan de la plaque collectrice vient avantageusement en contact plan avec un bord plan de la plaque formant paroi du boîtier.

Avantageusement, ladite partie de bord plan de la plaque collectrice est issue de pliage de la partie de liaison et est disposée au droit d'une extrémité du bord plan du collecteur.

Ladite partie de bord plan de la plaque collectrice est avantageusement pliée à angle droit de ladite partie de liaison.

Ladite partie de liaison est ainsi solidarisée audit collecteur de fluide de refroidissement et ladite partie de bord plan est ainsi solidarisée à la plaque de paroi du boîtier, selon des contacts plan sur plan et dans un encombrement particulièrement réduit.

D'autres caractéristiques et avantages de l'invention apparaîtront encore à la lecture de la description qui suit d'un exemple de réalisation donné à titre illustratif en référence aux figures annexées. Sur ces figures :
- la figure 1 est une vue en perspective illustrant de façon partielle un échangeur de chaleur conforme à l'invention ;
- la figure 2 est une vue en coupe partielle de l'échangeur de la figure 1 montrant une liaison de la plaque collectrice au collecteur et au boîtier; et
- la figure 3 est une vue en coupe partielle en perspective de l'échangeur de la figure 1 montrant une autre liaison de la plaque collectrice au collecteur et au boîtier.

Dans ce qui suit, des références numériques identiques seront utilisées pour désigner des éléments identiques ou analogues.

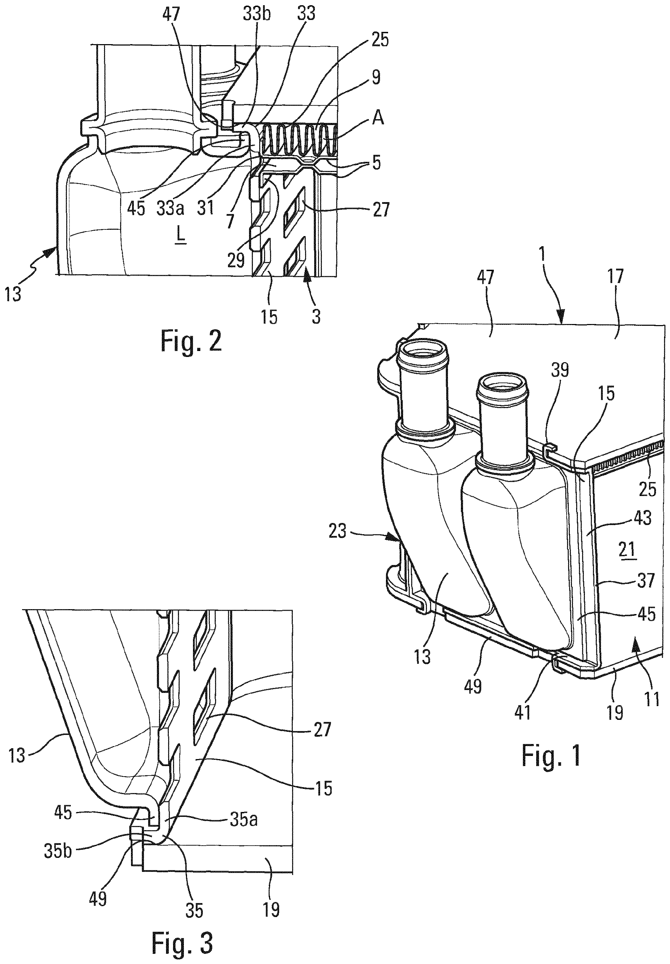

Comme illustré à la figure 1, l'invention concerne un échangeur de chaleur 1 permettant un échange de chaleur entre un premier fluide, par exemple un liquide de refroidissement L et un deuxième fluide, notamment un fluide à refroidir, par exemple un gaz A. Il pourra s'agir d'un refroidisseur d'air de suralimentation dans lequel le fluide à refroidir est un flux d'air comprimé A, destiné à alimenter un moteur thermique, par exemple un moteur de véhicule automobile. Ce flux d'air comprimé A est refroidi par le liquide de refroidissement L, notamment, un mélange d'eau et de glycol.

Ledit échangeur 1 comprend un faisceau d'échange de chaleur 3 comprenant ici un empilement de plaques 5 déterminant entre elles des circuits 7, 9 alternés pour le liquide de refroidissement L et pour le fluide à refroidir A. Le faisceau 3 est ici de forme globalement parallélépipédique et présente des plaques 5 agencées par paires de sorte que deux plaques 5 d'une même paire déterminent entre elles un canal de circulation 7 pour le liquide de refroidissement. Les circuits 9 pour la circulation du fluide à refroidir A sont prévus entre deux plaques 5 en vis-à-vis de deux paires de plaques adjacentes.

L'échangeur comprend également un boîtier 11 dans lequel le faisceau 3 est disposé, et un collecteur 13 de fluide de refroidissement monté sur le boîtier 11. Le boîtier comprend une première paroi latérale 15 située à gauche sur la figure 1 et formant plaque collectrice. Il comprend en outre ici une seconde paroi latérale non visible sur la figure, une paroi supérieure 17 et une paroi inférieure 19, reliant les parois latérales entre elles. Le boîtier 11 guide le fluide à refroidir A entre les plaques de faisceau 5, depuis une face d'entrée 21 jusqu'à une face de sortie 23 du faisceau 3.

L'échangeur 1 pourra aussi comprendre des surfaces d'échange secondaires 25, disposées dans les circuits 9 de circulation du deuxième fluide. Les surfaces d'échange secondaire 25 s'étendent entre deux plaques 5 en vis-à-vis appartenant à deux paires de plaques 5 adjacentes. Les surfaces d'échange secondaires 25 comprennent ici des perturbateurs ondulés, rapportés entre les plaques 5 dans les circuits 9 de circulation du fluide A à refroidir.

La figure 2 représente une coupe partielle en perspective du boîtier de faisceau et du collecteur, plus particulièrement au niveau de leur jonction supérieure.

La face latérale gauche 15 du boîtier ou plaque collectrice est percée d'orifices 27 au travers desquels circule le fluide de refroidissement L depuis le collecteur 13 jusque dans les plaques 5 du faisceau, par une ouverture 31 de ces dernières. Seules deux plaques de faisceau supérieures 5 reliées en vis à vis ont été représentées.

Ces plaques de faisceau 5 comprennent à leur extrémité un pli d'extrémité 29 par lequel elles sont reliées à la plaque collectrice 15. Ce pli d'extrémité 29 des plaques de faisceau 5 est formé en un bord plat entourant l'ouverture 31 de ces dernières. Les plaques 5 sont obtenues, par exemple, par emboutissage.

La plaque collectrice 15 comporte en outre un bord de périphérie supérieur 33, un bord de périphérie inférieure 35 et des bords latéraux 37, correspondant respectivement à chacun de ses côtés supérieur 39, inférieur 41 et latéraux 43.

Chacun des bords de périphérie supérieur 33 et inférieur 35 est plié à angle droit, respectivement, au niveau supérieur et au niveau inférieur de la plaque 15. Ces bords de périphérie supérieur 33 et bord de périphérie inférieur 35 délimitent chacun une partie de liaison plane et une partie de bord plan perpendiculaires adjacentes, respectivement 33a, 33b et 35a, 35b. Ces parties 33a, 33b et 35a, 35b reçoivent en application de jonction, plat sur plat, des bords plans correspondants 45, 47 et 49 de la périphérie, respectivement, du collecteur et des plaques supérieure 17 et inférieure 19 du boîtier.

La liaison du bord plan 45 du collecteur à la plaque collectrice 15 s'étend en outre sur les côtés latéraux 43 de ladite plaque collectrice 15 (figure 1) sur des parties de face planes de la dite plaque collectrice.

La plaque collectrice 15 est ainsi reliée au niveau supérieur d'une part, au collecteur par son bord 33a venant sur le bord plan 45 du collecteur et d'autre part, à la plaque 17 de paroi supérieure du boîtier par le bord plié supérieur 33b venant sur le bord plan correspondant 47 de la plaque du boîtier.

De même, la plaque collectrice 15 est reliée au niveau inférieur d'une part au collecteur par son bord 35a sur le bord plan 45 du collecteur et d'autre part à la plaque inférieure 19 du boîtier par le bord replié inférieur 35b venant sur le bord plan correspondant 49 de la plaque du boîtier, tel que représenté à la figure 3.

Ces bords 33a, 35a forment au sens de l'invention la partie de liaison plane de la plaque collectrice, partie de liaison plane qui est contigüe de certains des bords, dits périphériques, des orifices 27, à savoir des bords venant en vis-à-vis du collecteur au niveau de sa jonction avec la plaque collectrice. Ladite partie de liaison étant contigüe desdits bords périphériques, il faut comprendre qu'ils ne sont pas munis de collets.

Dans le mode de réalisation illustré, la plaque collectrice 15 étant plane, aucun desdits orifices 27 n'est d'ailleurs ici bordé de collets.

Les orifices 27 pourront être pourvus d'un chanfrein, formé dans l'épaisseur de la plaque collectrice, ledit chanfrein donnant aux orifices 27 une forme évasée vers le collecteur.

Il est à noter que la partie de liaison s'étend ici parallèlement à la rangée supérieure d'orifices 27 dans la direction d'extension de ces orifices. De même, la partie de liaison s'étend parallèlement à la rangée inférieure d'orifices 27 dans la direction d'extension de ces orifices.

Le bord plan 45 du collecteur et le pli d'extrémité 29 des plaques du faisceau viennent de chaque côté de la plaque 15, en opposition l'un à l'autre. Le bord plan 45 est en outre disposé à l'angle des parties 33a et 33b et de même au niveau inférieur.

Le pli en angle droit des bords 33 et 35 formé au droit de l'extrémité du bord plan 45 du collecteur, respectivement aux niveaux supérieur et inférieur facilite l'assemblage du collecteur sur le boîtier et donne des surfaces de contact pour la brasure.

Par ailleurs, la paroi de collecteur dont est issu le bord plan 45 pourra être située au droit des bords périphériques des orifices 27. Cette paroi de collecteur pourra encore être en chevauchement partiel desdits orifices 27.

Comme indiqué précédemment, la jonction des pièces est réalisée de façon étanche plat contre plat par brasage de la matière à base d'aluminium des composants constitutifs de l'échangeur de chaleur.

## Revendications

1. Echangeur de chaleur, notamment refroidisseur d'air de suralimentation de moteur de véhicule automobile, l'échangeur de chaleur comprenant un boîtier (11) pourvu d'un faisceau (3) d'échange de chaleur, un collecteur (13) d'un fluide de refroidissement circulant dans ledit faisceau d'échange de chaleur et une plaque collectrice (15) formant une paroi latérale du boîtier de l'échangeur de chaleur et du collecteur de fluide de refroidissement, ladite plaque collectrice (15) étant pourvue d'orifices (27) communiquant avec des conduits de circulation du fluide de refroidissement du faisceau, la plaque collectrice (15) comportant une partie de liaison plane (33a, 35a) solidarisée au dit collecteur (13) de fluide de refroidissement, en vis-à-vis de bords, dits bords périphériques, desdits orifices (27), ladite partie de liaison plane (33a, 35a) étant contigüe d'au moins un desdits bords périphériques, le collecteur (13) présentant un bord plan (45) disposé pour être solidarisé à ladite partie de liaison (33a, 35a) de la plaque collectrice, **caractérisé en ce que** le faisceau (3) comprend des plaques (5) présentant un bord plan d'extrémité (29) venant, en plan, autour du bord desdits orifices (27) de la plaque collectrice.

2. Echangeur de chaleur selon la revendication 1, dans lequel ladite plaque collectrice (15) comporte une partie centrale munie desdits orifices (27), ladite partie centrale étant plane.

3. Echangeur de chaleur selon l'une quelconque des revendications 1 ou 2, dans lequel le bord plan (45) du collecteur est issu d'une paroi du collecteur, ledit bord plan (45) étant plié vers l'extérieur de façon à permettre audit bord plan de s'appliquer en plan contre ladite partie de liaison (33a, 35a) de la plaque collectrice.

4. Echangeur de chaleur selon l'une quelconque des revendications précédentes, dans lequel ledit bord plan (45) du collecteur et un desdits bords plans d'extrémité (29) d'au moins une desdites plaques (5) du faisceau sont disposés de part et d'autre de ladite partie de liaison (33a, 35a).

5. Echangeur de chaleur selon l'une quelconque des revendications précédentes, dans lequel ledit bord plan (45) du collecteur et ledit bord plan d'extrémité (29) sont opposés l'un à l'autre relativement à ladite partie de liaison (33a, 35a).

6. Echangeur de chaleur selon l'une quelconque des revendications précédentes, dans lequel la plaque collectrice (15) comprend une partie de bord plan (33b, 35b), disposée adjacente à ladite partie de liaison (33a, 35a) et venant en contact avec une plaque (17, 19) formant paroi du boîtier.

7. Echangeur de chaleur selon la revendication 6, dans lequel la partie de bord plan (33b, 35b) de la plaque collectrice vient en contact plan avec un bord plan (47, 49) de la plaque de paroi du boîtier.

8. Echangeur de chaleur selon l'une quelconque des revendications 6 ou 7, dans lequel ladite partie de bord plan (33b, 35b) de la plaque collectrice est issue de pliage de la périphérie de la plaque collectrice (15).

9. Echangeur de chaleur selon l'une des revendications 6 à 8, dans lequel ladite partie de bord plan (33b, 35b) de la plaque collectrice est pliée à angle droit de ladite partie de liaison (33a, 35a).

10. Echangeur de chaleur selon la revendication 1, dans lequel le collecteur (13) comprend une paroi disposée au droit du ou desdits bords périphériques contigus à ladite partie de liaison (33a, 35a).

## Patentansprüche

1. Wärmetauscher, insbesondere Kraftfahrzeugmotor-Ladeluftkühler, wobei der Wärmetauscher ein Gehäuse (11) umfasst, das mit einem Wärmetauscherbündel (3) ausgestattet ist, einen Kollektor (13) eines Kühlmittels, das in dem Wärmetauscherbündel zirkuliert, und eine Sammelplatte (15), die eine Seitenwand des Gehäuses des Wärmetauschers und des Kollektors des Kühlmittels bildet, wobei die Sammelplatte (15) mit Öffnungen (27) versehen ist, die mit Zirkulationskanälen des Kühlmittels des Bündels kommunizieren, wobei die Sammelplatte (15) einen ebenen Verbindungsteil (33a, 35a) umfasst, der an dem Kollektor (13) des Kühlmittels gegenüber den Kanten, genannt Umfangskanten, der Öffnungen (27) angebracht ist, wobei der ebene Verbindungsteil (33a, 35a) an mindestens eine der Umfangskanten angrenzt, wobei der Kollektor (13) eine ebene Kante (45) aufweist, die an den Verbindungsteil (33a, 35a) der Sammelplatte angebracht werden kann, **gekennzeichnet durch**, dass das Bündel (3) Platten (5) umfasst, die eine ebene Endkante (29) aufweisen, die in der Ebene um die Kante der Öffnungen (27) der Sammelplatte verläuft.

2. Wärmetauscher nach Anspruch 1, bei dem die Sammelplatte (15) einen mit den Öffnungen (27) versehenen zentralen Teil aufweist, wobei der zentrale Teil eben ist.

3. Wärmetauscher nach einem der Ansprüche 1 oder 2, bei dem die ebene Kante (45) des Kollektors von einer Wand des Kollektors gebildet wird, wobei die ebene Kante (45) in der Art nach außen gebogen ist, dass die ebene Kante in der Ebene gegen den Verbindungsteil (33a, 35a) der Sammelplatte gesetzt werden kann.

4. Wärmetauscher nach einem der vorhergehenden Ansprüche, bei dem die ebene Kante (45) des Kollektors und eine der ebenen Endkanten (29) von mindestens einer der Platten (5) des Bündels auf beiden Seiten des Verbindungsteils (33a, 35a) angeordnet sind.

5. Wärmetauscher nach einem der vorhergehenden Ansprüche, bei dem die ebene Kante (45) des Kollektors und die ebene Endkante (29) bezüglich des Verbindungsteils (33a, 35a) einander gegenüberliegen.

6. Wärmetauscher nach einem der vorhergehenden Ansprüche, bei dem die Sammelplatte (15) einen Teil der ebenen Kante (33b, 35b) umfasst, der an den Verbindungsteil (33a, 35a) angrenzt und in Kontakt mit einer Platte (17, 19) verläuft, die eine Wand des Gehäuses bildet.

7. Wärmetauscher nach Anspruch 6, bei dem der Teil der ebenen Kante (33b, 35b) der Sammelplatte in ebenem Kontakt mit einer ebenen Kante (47, 49) der Gehäusewandplatte verläuft.

8. Wärmetauscher nach einem der Ansprüche 6 oder 7, bei dem der Teil der ebenen Kante (33b, 35b) der Sammelplatte durch Biegen des Umfangs der Sammelplatte (15) gebildet wird.

9. Wärmetauscher nach einem der Ansprüche 6 bis 8, bei dem der Teil der ebenen Kante (33b, 35b) der Sammelplatte in einem rechten Winkel zum Verbindungsteil (33a, 35a) gebogen wird.

10. Wärmetauscher nach Anspruch 1, wobei die Sammelplatte (13) eine Wand umfasst, die entlang der Umfangskante oder der Umfangskanten angeordnet ist, die an den Verbindungsteil (33a, 35a) angrenzen.

## Claims

1. Heat exchanger, in particular a supercharging air cooler for a motor vehicle engine, the heat exchanger comprising a housing (11) provided with a heat exchange bundle (3), a collector (13) of a cooling liquid circulating in said heat exchange bundle, and a collector plate (15) forming a side wall of the heat exchanger housing and of the cooling liquid collector, said collector plate (15) being provided with orifices (27) communicating with the cooling liquid circulation pipes of the bundle, the collector plate (15) comprising a flat connecting part (33a, 35a) fixed to said cooling liquid collector (13) opposite edges, called peripheral edges, of said orifices (27), said flat connecting part (33a, 35a) being contiguous to at least one of said peripheral edges, the collector (13) having a flat edge (45) arranged to be fixed to said connecting part (33a, 35a) of the collector plate, **characterized in that** the bundle (3) comprises plates (5) having a flat end edge (29) which in plan view surrounds said orifices (27) of the collector plate.

2. Heat exchanger according to Claim 1, **characterized in that** said collector plate (15) comprises a central part fitted with said orifices (27), said central part being flat.

3. Heat exchanger according to either of Claims 1 and 2, **characterized in that** the flat edge (45) of the collector arises from a collector wall, said flat edge (45) being folded towards the outside so as to allow said flat edge to lie flat against said connecting part (33a, 35a) of the collector plate.

4. Heat exchanger according to any of the preceding claims, **characterized in that** said flat edge (45) of the collector and one of said flat end edges (29) of at least one of said plates (5) of the bundle are arranged on either side of said connecting part (33a, 35a).

5. Heat exchanger according to either of Claims 1 and 2, **characterized in that** said flat edge (45) of the collector and said flat end edge (29) lie opposite each other relative to said connecting part (33a, 35a).

6. Heat exchanger according to any of the preceding claims, **characterized in that** the collector plate (15) comprises a flat edge part (33b, 35b) arranged adjacent to said connecting part (33a, 35a) and coming into contact with a plate (17, 19) forming a housing wall.

7. Heat exchanger according to Claim 6, **characterized in that** the flat edge part (33b, 35b) of the collector plate comes into flat contact with a flat edge (47, 49) of the plate of the housing wall.

8. Heat exchanger according to either of Claims 6 and 7, **characterized in that** said flat edge part (33b, 35b) of the collector plates arises from the folding of the periphery of the collector plate (15).

9. Heat exchanger according to any of Claims 6 to 8, **characterized in that** said flat edge part (33b, 35b) of the collector plate is folded at right angles to said connecting part (33a, 35a).

10. Heat exchanger according to Claim 1, **characterized in that** the collector (13) comprises a wall arranged at the level of said peripheral edge(s) contiguous to said connecting part (33a, 35a).
